# FASCICULE DE BREVET EUROPEEN

(11) **EP 2 195 148 B1**
(45) Date de publication et mention de la délivrance du brevet: **27.04.2011**
(21) Numéro de dépôt: 08834630.9
(22) Date de dépôt: 22.09.2008
(51) Int. Cl.: B29C 43/30, D06N 7/00

(54) **PROCEDE ET DISPOSITIF POUR LA FABRICATION DE REVETEMENTS DE SOL**
VERFAHREN UND VORRICHTUNG ZUR HERSTELLUNG VON BODENBELÄGEN
METHOD AND APPARATUS FOR MAKING GROUND COATINGS

(30) Priorité: 27.09.2007 EP 07301404
(43) Date de publication de la demande: 16.06.2010
(73) Titulaire: Tarkett SAS, 92000 Nanterre (FR)
(72) Inventeur: GEORGES, Jean-Philippe, B-6637 Fauvillers (BE); PERES, Richard, B-6600 Bastogne (BE)
(74) Mandataire: pronovem
(86) Numéro de dépôt international: PCT/EP2008/062643
(87) Numéro de publication internationale: WO 2009/040332

(56) Documents cités:
- WO-A-95/27007
- GB-A- 1 569 943
- US-A- 4 794 020
- US-A- 5 571 588
- US-B1- 6 217 700

## Description

### Domaine technique

La présente invention concerne la réalisation d'un revêtement de sol à partir de particules polymères (paillettes, vermicelles, grains,..) pouvant couvrir un très large palette d'aspects, y compris un aspect de produit dit homogène présentant une surface parfaitement lisse et régulière.

### Etat de la technique

Dans le domaine des revêtements de sol, les produits résilients, le plus souvent à base de PVC, connaissent un grand succès en grande partie dû à la variété de possibilités de décor qu'ils permettent. Il est en effet possible de les imprimer, de réaliser des grainages chimiques ou mécaniques éventuellement en rapport avec les dessins imprimés, de réaliser des effets de matière en associant différents types de particules, conduisant à des veinages, à des imitations de pierres ou autres effets minéraux ou plus généralement naturels.

Concernant ces aspects de matière qui séduisent de plus en plus le public et auxquels se rattachent l'invention, deux techniques coexistent.

La première qui conduit à la formation de la famille des produits appelés «homogènes» comporte les étapes suivantes :
1 Extruder un certain nombre de films de couleurs ou de matités différentes à partir d'une matière thermoplastique, généralement du PVC
2 Granuler mécaniquement ces films pour obtenir des particules de formes plus ou moins sphériques de l'ordre de 5 mm de diamètre (fonction de l'épaisseur finale du produit)
3 Mélanger mécaniquement ces particules en fonction de l'aspect souhaité pour le produit fini et les distribuer sur un convoyeur à l'aide de distributeur de type Villars®. On vise en général un dépôt d'une seule couche de particules, c'est-à-dire que les particules sont toutes en contact avec le convoyeur et ne se chevauchent que très peu. Les distributeurs courants ne permettant pas un dépôt à ce point régulier, pour attendre cet objectif le convoyeur peut être soumis à des vibrations, les particules étant libres, le « trop plein » peut être évacué par les bords du convoyeur.
4 Introduire cet ensemble de particules dans une presse double bandes de type Hymen®. Ces machines jouent le rôle d'une calandre mais permettent de maintenir les particules à la température souhaitée de ramollissement du matériau thermoplastique pendant plusieurs secondes en le comprimant progressivement. Elles évitent donc de trop déformer les particules et de créer des effets lignés (directionnels) sur le produit fini. Pendant le ramollissement sous pression élevée (jusqu'à 40 bars.), les particules à base du même matériau thermoplastique s'agglomèrent les unes aux autres, leurs sommets sont écrasés si bien que le produit formé a l'aspect d'un film continu aux surfaces parfaitement lisses.

Chaque particule avec ses caractéristiques de couleur ou matité reste néanmoins visible en tant que telle, bien que déformée, ce qui confère au produit son aspect spécifique.

Ce produit est constitué d'une seule couche de matériaux homogène (car de même nature chimique), d'où son nom.

Lorsque ce matériau sera soumis au trafic en tant que revêtement de sol, son usure ne provoquera pas de variation d'aspect car le produit est par construction également homogène dans son épaisseur (une seule couche de particules déposée sur le convoyeur).

Ces produits n'ont donc pas intrinsèquement besoin de protection supplémentaire vis-à-vis du trafic lié à leur utilisation, c'est-à-dire, comme pour les produits à base de plastisol (voir ci-dessous), d'une couche d'usure (ou de lissage) généralement déposée sous forme liquide en fin du procédé de production, puis gélifiée dans un four.

Ces produits constituent une famille très appréciée pour ses qualités de résistance.

Les particules peuvent avoir une large étendue de couleurs ou de matités. Des effets esthétiques différents peuvent être obtenus en variant le diamètre des particules, voir en mélangeant des particules de diamètres différents.

Des sophistications existent qui consistent à réaliser des dessins assez grossiers par un système de caches ou tiroirs disposés en dessous des distributeurs ou à utiliser des particules de tailles ou de formes inusitées, ainsi qu'il est décrit dans le brevet EP 1838510.

Néanmoins il reste impossible avec cette technique d'associer des particules de natures chimiques différentes et encore moins des particules minérales ou métalliques, ni même des particules de type paillettes non sphériques car ces particules seront inévitablement déformées lors du process. La palette esthétique liée à ce procédé s'en trouve donc fortement limitée.

La seconde qui conduit à la formation de la famille des produits appelés «hétérogènes» est basée sur l'utilisation du plastisol (mélange de PVC, plastifiant et éventuellement charge) qui se présente sous une forme liquide.

Pour former les produits appelés «hétérogènes»:
1 On dépose, à l'aide d'une racle ou de cylindres ou de tout autre moyen approprié, une première couche liquide de plastisol coloré, opaque ou transparent donc non chargée (alors qu'un plastisol normal est chargé à 50% avec en général du carbonate de calcium) sur un substrat pouvant être par exemple un film calandré armé d'un voile de fibres de verre.
2 On vient ensuite saupoudrer sur cette couche de plastisol des particules à l'aide d'un distributeur par exemple de type Villars®.
3 A ce stade, on ne contrôle pas la pénétration des particules dans le plastisol. Elles restent majoritairement en surface créant ainsi un relief aléatoire.
4 De plus, il est impossible d'obtenir un dépôt de type monocouche (pas de vibration possible à cause de la viscosité du plastisol) et si l'on cherche à éliminer les particules en excès par une aspiration par exemple, on viendra inévitablement les contaminer par du plastisol ce qui les rendra non recyclable et créera de multiples problèmes de pollution.
5 Le produit est ensuite pré-gélifié. C'est-à-dire qu'il passe sous un ensemble d'infrarouge ou dans un four, ce qui permettra un premier durcissement du plastisol donc de figer les particules.
6 On dépose ensuite une nouvelle couche de plastisol transparent dit plastisol de lissage, dont le rôle sera de fermer le produit, c'est-à-dire de combler les vides entre les particules ou les irrégularités de surface que leur chute a inévitablement causées dans le milieu du plastisol. Ce plastisol, peu ou pas chargé, est donc onéreux. De plus il n'est jamais à proprement parler parfaitement transparent et va donc causer un voile « laiteux » au-dessus du décor réalisé par les particules.
7 Ce dépôt est suivi d'une gélification dans un four qui assurera la cohésion définitive du revêtement.

Ces deux descriptions succinctes permettent donc bien de comprendre les avantages et inconvénients de chacune de ces deux familles de produits.

Les produits homogènes ne nécessitent pas de couche de lissage (ou d'usure) transparente mais restent limités esthétiquement à cause du type restreint de particules utilisables, (du fait en particulier de leur déformation), tandis que les produits hétérogènes basés sur le plastisol, s'ils peuvent utiliser des particules de toutes formes et natures en les mariant les unes aux autres, nécessitent un apport important de plastisol « transparent » donc onéreux, car faiblement chargé qui va de plus brouiller la lecture du décor, ainsi qu'une couche d'usure à base de PU, donc également onéreuse.

Avec cette seconde technique, les aspects proches des homogènes sont également impossibles à atteindre à cause de la conjugaison plastisol / distributeur qui ne permet pas le dépôt d'une mono-couche.

La qualité de lecture du décor est moins bonne que dans le cas des homogènes à cause de l'ajout du plastisol de lissage, les particules n'étant jamais à proprement parler à la surface du revêtement.

Finalement, les procédés actuels au plastisol nécessitent un grand nombre d'étapes successives distinctes qu'il faut contrôler individuellement et qui augmentent d'une manière générale les coûts de production.

Jusqu'à présent ces techniques sont donc restées complémentaires, se cantonnant chacune dans son registre esthétique et économique.

### Objet de l'invention

C'est l'objet de l'invention de proposer une technique unique permettant d'obtenir un grand nombre d'aspects esthétiques liés à l'emploi de particules tout en bénéficiant également d'un état de surface parfaitement lisse et ce, même sans devoir recourir à une couche d'usure supplémentaire.

Cet objet est atteint par un procédé de fabrication d'un nouveau revêtement de sol en matière thermoplastique selon la revendication 1.

L'invention prévoit également un dispositif permettant d'obtenir un tel revêtement de sol nouveau, ainsi que le revêtement lui-même.

### Description générale de l'invention

L'invention repose essentiellement sur deux constatations surprenantes pour l'homme de l'art.

Premièrement, la qualité d'état de surface propre aux produits homogènes peut être obtenue avec des niveaux de pression bien inférieurs aux niveaux généralement requis lors de la formation de tels produits.

II convient en effet de distinguer au moment du passage de ce qui n'est encore qu'un lit de particules dans la machine double presse de type Hymmen® entre d'un côté les conditions thermodynamiques nécessaires à l'adhésion des particules entre elles et donc de la formation du film cohésif et d'autre part les conditions thermodynamiques nécessaires à l'obtention d'une surface lisse.

En ce qui concerne les conditions d'adhésion dans le cas des produits homogènes, une température généralement de l'ordre de 160°C, et une pression de l'ordre de 20 à 40 bars sont requises pour déformer et suffisamment presser les particules les unes contre les autres. En effet, ne pouvant aller jusqu'à la fusion, laquelle entraînerait un mélange des coloris et une perte totale de l'intégrité des particules, il est nécessaire de compenser par un niveau très élevé de pression.

II a été déterminé lors d'essais en laboratoire utilisant le même type de granules que dans les produits homogènes, la pression nécessaire à l'obtention d'une surface lisse ou du moins régulière (car on peut souhaiter un léger grainage de surface pour accroître la matité), donc conforme à l'état de surface de la bande en contact avec le produit, était comprise entre 1 et 2.5 bars, soit bien inférieure à la pression de formation du produit homogène lui-même.

Ces premiers essais ont permis d'obtenir des produits ayant l'aspect de produits homogènes, soit d'un film parfaitement lisse, mais bien sûr sans la cohésion suffisante : les particules se détachaient les unes des autres lors de la manipulation.

Les deux phénomènes de constitution sous forme de film du produit et son lissage de surface ayant lieu simultanément dans la même machine, on en a conclu à tort qu'ils nécessitaient les mêmes conditions opératoires.

La deuxième constatation surprenante à base de la présente invention est que la technique connue utilisant du plastisol peut être adaptée de manière avantageuse pour obtenir des produits combinant les avantages de cette technique avec ceux d'un procédé pour la fabrication de produits homogènes.

En effet, comme indiqué ci-dessus, jusqu'à présent, ces deux techniques étaient bien distinctes et il est généralement admis qu'elles ne pouvaient guère converger au vu des différences fondamentales à leur base.

Au cours des recherches qui ont mené à la présente invention, les inventeurs ont constaté qu'en gardant la première étape du procédé hétérogène au plastisol à savoir la distribution de particules sur une couche de plastisol liquide et en réalisant une gélification ou du moins une prégélification, il est possible d'obtenir un résultat intéressant en utilisant une pression faible de l'ordre de 2 bars. Ce niveau de pression se révèle en effet suffisant pour garantir un excellent rendu de surface tandis que une température autour de 180°C va autoriser la prégélification du plastisol et donc une parfaite adhésion des particules au sein du plastisol et la cohésion du produit lui-même. Une gélification définitive pour être in fine obtenu par des moyens conventionnels, tels que par des cylindres gélificateurs ou fours (infrarouge ou au gaz, par exemple).

En conclusion, la présente invention permet d'obtenir un revêtement de sol en matière thermoplastique qui dans sa forme la plus simple est un revêtement de type homogène avec les avantages qui y sont associés, à savoir une insensibilité plus grande à l'usure dans le sens que l'aspect ne se dégrade pas au cours de l'utilisation, même sans couche d'usure supplémentaire, ainsi qu'une méthode de fabrication plus simple et plus économique. En effet, dans un revêtement de sol obtenu avec le procédé de la présente invention, les particules se trouvent côte à côte comme dans le cas d'un revêtement de type homogène.

D'autre part, l'invention permet également de bénéficier des avantages spécifiques aux revêtements au plastisol en offrant une variabilité plus grande au niveau de l'aspect, de même que la production de revêtements de sol de qualité plus lourde, possédant le cas échéant une sous-couche textile, etc.

Un avantage particulier supplémentaire de la présente invention est que le dispositif ou la machine permettant cette prégélification sous faible pression peut comprendre deux bandes transporteuses résistantes à la chaleur, de préférence téflonées, de longueurs variables dépendant du temps de prégélification, en fonction de la quantité de plastisol déposé et des vitesses de production souhaitées.

Dans une telle machine, lesdites particules de matériaux sont déposées directement sur une couche de plastisol se trouvant sur une bande transporteuse thermorésistante ou sur un matériau support placé sur cette dernière. Cette couche passe ensuite successivement par une section de préchauffage, de chauffage et de refroidissement d'une zone de traitement d'une installation conçue pour mettre en oeuvre ledit procédé. Le dispositif permet de préférence qu'un système de guidage de la bande transporteuse supérieure puisse être réglé et fixé dans une direction verticale.

On peut citer comme machine pouvant convenir moyennant certaines adaptations au présent procédé les machines commercialisées sous la marque Thermofix® par la société allemande Schilling-Knobel GmbH, en particulier celles décrites dans le brevet US 6.217.700 ou dans le brevet EP 1045751.

En effet, jusqu'ici, ces machines étaient conçues et utilisées dans le cadre industriel uniquement pour l'emploi de poudre de type « dry blend », mais elles pourraient remplir les conditions requises (doubles bandes, niveaux de pression) moyennant certaines adaptations propres aux résines liquides, telles le plastisol (racle, cylindre, par gomme adaptée, etc.).

Mais bien sûr d'autres machines permettant intrinsèquement un niveau de pression plus important peuvent être utilisées telles les machines de type AUMA® constituées d'un cylindre chauffant et d'une bande épousant environ une demi-circonférence du cylindre ou les machines de type Hymmen® préalablement décrites.

### Description détaillée de l'invention

La présente invention propose donc un procédé de fabrication d'un nouveau revêtement de sol en matière thermoplastique comme décrit dans la revendication 1.

L'étape de mise sous pression et chaleur (c) est réalisée de préférence entre deux bandes transporteuses inférieure et supérieure, de manière davantage préférée dans une presse double bande. La pression exercée sur le revêtement de sol est de préférence faible et se situe généralement entre 0.05 et 8 bars, de préférence entre 0.1 et 5 bars et de manière particulièrement préférée entre 0.15 et 3 bars.

En général, la couche de composant liquide a une épaisseur comprise entre 0.5 mm et 3 mm.

Le composant liquide est choisi dans le cadre de la présente invention parmi un plastisol, un organosol ou une émulsion de caoutchouc SBR.

On utilise de préférence les plastisols. Les plastisols utilisables sont d'une manière générale ceux connus de l'homme de métier, éventuellement transparents ou translucides, et compatibles avec les particules utilisées., par exemple les mélanges à base de PVC et de plastifiants.

Le composant peut également être un organosol (mélange à base de plastifiant(s) et de polymères compatibles) qui de manière plus générale peut convenir à l'invention, comme par exemple les organosols à base de PMMA (acide poly méthacrylate de méthyle) ou d'acrylique.

Certains polymères sous forme d'émulsion peuvent également convenir, tel les SBR (Styren Butadien Rubbers) : on parlera alors de réticulation plutôt que de gélification.

Dans le présent document, le terme «plastisol» peut donc en variante être remplacé par les termes « organosol » ou « émulsion de SBR » et la présente invention concerne donc également ces variantes. Comme suggéré ci-dessus, dans le cas d'émulsions de SBR, le terme « gélifier », ainsi que les termes apparentés devra être lu comme ayant la signification de « réticuler ».

Les granules ou particules solides utilisables dans le cadre de la présente invention sont des matériaux particulaires comprenant des matériaux thermoplastiques, par exemple, mais non exclusivement, le chlorure de polyvinyle (PVC), les polyoléfines, les polyamides ou leurs mélanges, mais également des particules d'origine minérale ou métalliques. Les granules utilisés pour la fabrication d'un revêtement de sol peuvent être de nature et/ou d'aspect différent du moment qu'ils sont compatibles avec le plastisol utilisé.

La quantité de particules utilisée peut varier de 0. à 60 % en poids de la couche plastisol + granules, de préférence de 1 à 20 % en poids en fonction de l'aspect et des autres propriétés recherchées. Le rapport de particules au plastisol est choisi de telle manière que les particules après le procédés sont bien enrobées par le plastisol gélifié de manière à pouvoir obtenir une surface cohésive.

La taille des particules dépend évidemment de l'épaisseur de revêtement de sol désirée et par conséquent de l'épaisseur de plastisol appliquée. De manière générale, la dimension la plus importante des granules ne dépasse pas (de manière significative) celle prévue pour le revêtement final. Leur forme n'est par contre pas cruciale, mais permet de varier davantage encore les décors possibles.

Le dépôt de plastisol peut se faire directement sur la bande transporteuse inférieure ou sur un support placé sur celle-ci. Ce support peut être amovible pour être enlevé du revêtement de sol en fin de procédé ou ultérieurement, par exemple un papier de type « release » ou toute autre moyen équivalent connu de l'homme de métier.

Le support peut également faire partie intégrante du revêtement de sol fini si on le souhaite. Dans ce cas, on parlera de sous-couche qui est choisie par exemple parmi une sous-couche calandrée, un textile, un non-tissé, etc., notamment en fibres de verre, de polyester, de fibres naturelles, etc.

Le procédé selon l'invention comprend une étape de prégélification entre l'étape de saupoudrage (b) de particules sur la couche de plastisol liquide et l'étape de mise sous pression et chaleur (c).

La durée nécessaire aux différentes étapes du procédé dépend de la nature et de la quantité de plastisol et de particules déposés, mais également de la température et de la pression utilisées. Comme la pression est relativement faible et que la température de gélification ne doit pas dépasser un certain seuil pour ne pas fondre entièrement les granules, il est possible d'adapter la vitesse des bandes transporteuses et/ou leur longueur en fonction des autres paramètres.

Un autre aspect de l'invention concerne un dispositif, en particulier pour la réalisation du procédé de fabrication d'un revêtement de sol en matière thermoplastique tel que décrit dans la revendication 6.

La distance entre les deux bandes transporteuse (a) et (b) est de préférence réglable en fonction de l'épaisseur de revêtement de sol choisi. La bande transporteuse supérieure (b) peut être conçue de manière flottante afin de contrôler la pression exercée sur le revêtement de sol.

Le dispositif comprend une zone de chauffage supplémentaire (g) (zone de préchauffage ou de prégélification) avant et/ou après l'applicateur de matériaux particulaires (f) permettant la prégélification du plastisol.

L'applicateur ou distributeur de plastisol (e) peut être de tout type connu et comprend de préférence une racle et/ou un ou plusieurs cylindres. Un applicateur de plastisol particulièrement approprié permet de déposer une couche de plastisol d'une épaisseur comprise entre 0.5 mm et 3 mm. Dans le cas de l'utilisation d'un support destiné à être intégré dans le revêtement, il peut être avantageux d'effectuer l'application de plastisol en plus d'une étape, par exemple au moyen d'un applicateur de plastisol (e) à deux zones d'application distinctes, séparées par exemple par une zone de chauffage supplémentaire, afin de prétraiter le support. Le plastisol appliqué à la première étape, puis prégélifié sert alors d'apprêt pour le support.

L'applicateur de matériaux particulaires (f) peut être dans sa forme la plus simple un distributeur de granules, paillettes, etc. d'un seul type ou aspect, mais il sera généralement avantageux de pouvoir appliquer plusieurs types de granules d'aspect, de taille, de nature et/ou couleur différents, soit en mélange, soit successivement.

Comme déjà indiqué ci-dessus pour le procédé selon l'invention, le dispositif peut en outre comprendre (h) un applicateur d'un support en amont de l'applicateur de plastisol (a). Le support peut dans ce cas être amovible du revêtement de sol fini, par exemple un papier de type « release », ou faire partie intégrante du revêtement de sol sous forme d'une sous-couche solidaire, de préférence une sous-couche calandrée, un textile, un non-tissé ou un voile de verre.

De manière avantageuse un revêtement de sol en matière thermoplastique tel que décrit ci-dessus, est obtenu par un procédé ou au moyen d'un dispositif tels que décrits ci-avant et comprend des particules solides intégrées dans une couche de plastisol gélifiée dont la surface supérieure est essentiellement lisse.

En fonction des propriétés recherchées pour le revêtement de sol, il est également possible de l'appliquer sur un substrat, indépendamment de l'utilisation d'un support intégré, notamment sur un substrat flexible, par exemple une couche de mousse, ou sur un substrat rigide, par exemple en bois sous forme pure, stratifiée, agglomérée ou combinée avec des matières plastiques (composites), ou en matière plastique rigide, par exemple du type polypropylène extrudé, etc.

Finalement, même si les revêtements de sol n'ont pas besoin a priori d'une couche d'usure supplémentaire, il peut être avantageux ou souhaitable d'y appliquer une telle couche supplémentaire, par exemple de quelques micromètres à base de polyuréthane, par exemple pour encore améliorer la protection contre les taches.

D'autres particularités et caractéristiques de l'invention ressortiront de l'exemple ci-dessous

### Exemples

**Exemple de structure de produit (revêtement de sol)**

De bas en haut : sous-couche calandrée 1 mm de voile de verre - 1 mm de plastisol jusqu'à une épaisseur totale de 2 mm

Description de la structure : produit hétérogène avec décor dans la masse consistant en une incorporation de particules en surface sans ajout de couche d'usure transparente.

Mode opératoire pour cette structure

Déroulement de la sous-couche calandrée - enduction de 1 mm de plastisol (par exemple opaque) sur le voile de verre (en variante on peut « fermer » le voile de verre avec un premier dépôt de 200 µm suivi d'un passage de gélification, puis en déposant une couche 800 µm par racle ou reverse roll)-distribution des paillettes - passage sous un four à infrarouges (IR) ou sous un four thermique - passage dans une presse double bande à faible pression (par exemple de type Thermofix® modifié) - grainage facultatif-dépôt facultatif d'une couche de finition PU

Paramètres de la presse double bande à faible pression
Zone de chauffage : 3 m
Température zone haut/bas : 190°C
Vitesse : 0.6 m/min
Pression : 4 bars (mais comparativement à la pression d'une presse double bande acier la pression est plutôt < 1 bar)

Formule de plastisol

| | |
|---|---|
| Lacovyl PB 1805 (PVC) | 1500,0 |
| Lacovyl PB 1202 (PVC) | 750,0 |
| Vinnolit C 66 W (PVC) | 750,0 |
| DIHP (Plastifiant) | 975,0 |
| Abaisseur de viscosité | 225,0 |
| Stabilisant | 75,0 |
| Huile de soja époxydée | 60,0 |
| RC 82 (titane) | 130,0 |

Formule des paillettes

| | |
|---|---|
| Minex S 40 (charge transparente) | 270 |
| Stabilisant | 180 |
| DINP (plastifiant) | 1020 |
| Huile de soja époxydée) | 135 |
| Etinox 630 (PVC) | 4560 |
| Antistatique | 60 |
| Mic Rouge BRN - AQ (20%) (pigment) | 0,495 |
| Mic Blanc 220 NQ - F (pigment) | 59,565 |
| Mic Bleu 138 AQ (GLP - AQ) 20% (pigment) | 0,435 |
| Mic Noir SRF - NQ F 30% (pigment) | 3,675 |

Le revêtement de sol obtenu présente une surface très lisse et une cohésion importante.

## Revendications

1. Procédé de fabrication d'un revêtement de sol en matière thermoplastique comprenant les étapes suivantes :
(a) dépôt d'une couche d'un composant liquide sur un support, le composant liquide étant choisi parmi un plastisol, un organosol ou une émulsion de caoutchouc SBR,
(b) saupoudrage de particules solides sur la couche de composant liquide,
(c) mise sous pression et chaleur entre deux bandes transporteuses inférieure et supérieure afin de former un revêtement de sol ayant une surface lisse, la pression étant limitée à entre 0,1 et 5 bars,
(d) une étape de prégélification entre l'étape de saupoudrage (b) de particules sur la couche de composant liquide et l'étape de mise sous pression et chaleur (c).

2. Procédé selon la revendication 1, dans lequel le support est amovible du revêtement de sol, de préférence un papier de type « release » ou une bande transporteuse inférieure..

3. Procédé selon la revendication 1, ou 2, dans lequel le support fait partie du revêtement de sol et est choisi parmi une sous-couche calandrée, un textile ou un non-tissé ou voile de verre.

4. Procédé selon l'une quelconque des revendications précédentes, dans lequel la couche de composant liquide a une épaisseur comprise entre 0.5 mm et 3 mm.

5. Procédé selon l'une quelconque des revendications précédentes, dans lequel les particules solides sont choisies parmi les matériaux plastiques, minéraux, métalliques ou leurs mélanges.

6. Dispositif pour la réalisation du procédé de fabrication d'un revêtement de sol en matière thermoplastique selon l'une quelconque des revendications 1 à 5, comprenant (a) une bande transporteuse inférieure, (b) une bande transporteuse supérieure disposée au-dessus d'une partie de la bande transporteuse inférieure (a) et à une distance de celle-ci qui correspond à l'épaisseur du revêtement de sol et permettant d'exercer une pression entre 0,1 et 5 bars sur celui-ci, (c) une zone de chauffage suivie de (d) une zone de refroidissement, ainsi qu'en amont de la zone de chauffage (c), (e) un applicateur de composant liquide, suivi de (f) un applicateur de matériaux particulaires au-dessus de la bande transporteuse inférieure (a), le dispositif comprenant une zone de chauffage supplémentaire (g) avant et/ou après l'applicateur de matériaux particulaires (f) permettant la prégélification du composant liquide,

7. Dispositif selon la revendication 6, dans lequel l'applicateur de composant liquide (e) comprend au moins une racle et/ou un cylindre.

8. Dispositif selon la revendication 6 ou 7, comprenant en outre (h) un applicateur d'un support en amont de l'applicateur de composant liquide (a), le support pouvant être amovible du revêtement de sol, de préférence un papier de type « release », ou faire partie du revêtement de sol de préférence une sous-couche calandrée, un textile ou un non-tissé.

9. Dispositif selon l'une quelconque des revendications 6 à 8, dans lequel l'applicateur de composant liquide (a) permet de déposer une couche de composant liquide d'une épaisseur comprise entre 0.5 mm et 3 mm.

## Claims

1. A process for manufacturing a thermoplastic floor covering comprising the following steps:
(a) depositing a layer of a liquid component onto a support, the liquid component being chosen from a plastisol, an organosol or an emulsion of SBR rubber;
(b) sprinkling solid particles onto the layer of liquid component;
(c) applying pressure and heat between two lower and upper conveyor belts in order to form a floor covering that has a smooth surface, the pressure being limited to between 0.1 and 5 bar; and
(d) a pregelling step between the step (b) of sprinkling particles onto the layer of liquid component and the step (c) of applying pressure and heat.

2. The process according to claim 1, wherein the support is removable from the floor covering, preferably a "release" type paper or a lower conveyor belt.

3. The process according to claim 1 or 2, wherein the support is part of the floor covering and is chosen from a calendered sublayer, a textile or a nonwoven fabric or glass web.

4. The process according to any one of the preceding claims, wherein the layer of liquid component ha a thickness between 0.5 mm and 3 mm.

5. The process according to any one of the preceding claims, wherein the solid particles are chosen from plastic, inorganic or metallic materials or mixtures thereof.

6. A device for carrying out the process for manufacturing a thermoplastic floor covering according to any one of claims 1 to 5, comprising (a) a lower conveyor belt, (b) an upper conveyor belt placed above a portion of the lower conveyor belt (a) and at a distance from the latter which corresponds to the thickness of the floor covering and that makes it possible to exert a pressure between 0.1 and 5 bar on this floor covering, (c) a heating zone followed by (d) a cooling zone, and also upstream of the heating zone (c), (e) a liquid component applicator, followed by (f) a particulate material applicator above the lower conveyor belt (a), the device comprising a supplementary heating zone (g) before and/or after the particulate material applicator (f) enabling pregelling of the liquid component.

7. The device according to claim 6, wherein the liquid component applicator (e) comprises at least on doctor blade and/or one roll.

8. The device according to claim 6 or 7, comprising, in addition, (h) a support applicator upstream of the liquid component applicator (a), the support possibly being removable from the floor covering, preferably a "release" type paper, or being part of the floor covering, preferably a calendered sublayer, a textile or a nonwoven fabric.

9. The device according to any one of claims 6 to 8, wherein the liquid component applicator (a) makes it possible to deposit a layer of liquid component having a thickness between 0.5 mm and 3 mm.

## Patentansprüche

1. Herstellungsverfahren einer Bodenbeschichtung aus thermoplastischem Material, das die folgenden Stufen umfasst:
(a) Aufbringen einer Schicht aus einer flüssigen Komponente auf einen Träger, wobei die flüssige Komponente aus einem Plastisol, einem Organosol oder einer Kautschukemulsion SBR ausgewählt ist,
(b) Bestäuben der Schicht aus der flüssigen Komponente mit festen Partikeln,
(c) Druck- und Hitzebeaufschlagung zwischen zwei Förderbändern, einem unteren und einem oberen, um eine Bodenbeschichtung zu formen, die eine glatte Oberfläche hat, wobei der Druck zwischen 0,1 und 5 bar begrenzt ist
(d) Eine Vorgelierungsstufe zwischen der Bestäubungsstufe (b) der Schicht aus der flüssigen Komponente mit festen Partikeln und der Druck- und Hitzebeaufschlagungsstufe (c).

2. Verfahren gemäß Anspruch 1, in dem der Träger von der Bodenbeschichtung, bevorzugt ein Papier vom Typ "Release" oder ein unteres Förderband, abnehmbar ist.

3. Verfahren gemäß Anspruch 1 oder 2, in dem der Träger Teil der Bodenbeschichtung ist und aus einer kalandrierten Unterschicht, einem Textil oder einem Vlies oder einem Glasflor ausgewählt ist.

4. Verfahren gemäß einem der vorherigen Ansprüche, in dem die Schicht aus der flüssigen Komponente eine zwischen 0,5 mm und 3 mm inbegriffene Dicke hat.

5. Verfahren gemäß einem der vorherigen Ansprüche, in dem die festen Partikel aus Plastikmaterial, Mineralien, Metallen oder ihren Mischungen ausgewählt ist.

6. Vorrichtung für die Realisierung des Herstellungsverfahrens einer Bodenbeschichtung aus thermoplastischem Material gemäß Anspruch 1 bis 5, die (a) ein unteres Förderband, (b) ein oberes Förderband, das oberhalb eines Teils des unteren Förderbandes (a) und in einer Entfernung desselben angeordnet ist, die der Dicke der Bodenbeschichtung entspricht und die Ausübung eines Druck zwischen 0,1 und 5 bar auf dasselbe erlaubt (c) eine Heizzone, auf die eine Kühlzone folgt, sowie oberhalb der Heizzone (c) (e) eine Appliziereinrichtung der flüssigen Komponente, auf die (f) eine Appliziereinrichtung für Partikelmaterial oberhalb des unteren Förderbandes (a) folgt, wobei die Vorrichtung eine zusätzliche Heizzone (g) vor und / oder nach der Appliziereinrichtung für Partikelmaterial (f) umfasst, die die Vorgelifizierung der flüssigen Komponente erlaubt, umfasst.

7. Vorrichtung gemäß Anspruch 6, in der die Appliziereinrichtung für die flüssige Komponente (e) wenigstens ein Rakel und / oder einen Zylinder umfasst.

8. Vorrichtung gemäß Anspruch 6 oder 7, die darüber hinaus (h) eine Appliziereinrichtung eines Trägers oberhalb der Appliziereinrichtung für die flüssige Komponente (a) umfasst, wobei der Träger von der Bodenbeschichtung abnehmbar sein kann, bevorzugt ein Papier vom Typ "Release", oder Teil der Bodenbeschichtung sein kann, bevorzugt eine kalandrierte Unterschicht, ein Textil oder ein Vlies.

9. Vorrichtung gemäß Anspruch 6 bis 8, in der die Appliziereinrichtung für die flüssige Komponente (a) das Aufbringen einer Schicht aus der flüssigen Komponente in einer zwischen 0,5 mm und 3 mm inbegriffenen Dicke erlaubt.
